# EUROPEAN PATENT SPECIFICATION

(11) **EP 4 076 842 B1**
(45) Date of publication and mention of the grant of the patent: **28.01.2026**
(21) Application number: 20842035.6
(22) Date of filing: 18.12.2020
(51) Int. Cl.: B24D 3/10, B24D 11/02

(54) **POLISHING SHEET AND POLISHING METHOD**
POLIERFOLIE UND POLIERVERFAHREN
FEUILLE DE POLISSAGE ET PROCÉDÉ DE POLISSAGE

(30) Priority: 20.12.2019 JP 2019230569
(43) Date of publication of application: 26.10.2022
(73) Proprietor: 3M Innovative Properties Company, Saint Paul, Minnesota 55133-3427 (US)
(72) Inventor: NAKAMURA, Yoko, Tokyo 141--8684 (JP); ISHIHARA, Yoko, Tokyo 141--8684 (JP); TASAKA, Yoshihiko, Tokyo 141--8684 (JP)
(74) Representative: Vossius & Partner Patentanwälte Rechtsanwälte mbB
(86) International application number: PCT/IB2020/062234
(87) International publication number: WO 2021/124283

(56) References cited:
- WO-A1-98/39142
- WO-A2-2010/011801
- WO-A2-2019/135180
- JP-A- 2016 140 937
- JP-A- S57 175 775
- US-A1- 2012 325 562
- ABBEON: "Abbeon Diamond Edge Polisher", YOUTUBE, 7 December 2018 (2018-12-07), pages 1 pp., XP054981613, Retrieved from the Internet <URL:https://www.youtube.com/watch?v=hCHiCh6emmk> [retrieved on 20210325]

## Description

### Technical Field

The present invention relates to a polishing sheet and a polishing method.

### Background

Various polishing materials have been studied in the related art to form smooth surfaces on metal products and the like. For example, JP 9-502665 T and JP 2015-223653 A describe a polishing material provided with a polishing portion having a three-dimensional shape.

WO 98/39142 A1 relates to an abrasive article which comprises a backing; and at least one three-dimensional abrasive coating comprising diamond particles dispersed within a binder bonded to a surface of the backing, the binder comprising a cured binder precursor including a urethane acrylate oligomer. Such document describes a polishing sheet comprising: a substrate; a plurality of three-dimensional elements that includes diamond abrasive particles and a bonding material, and forms a polishing surface; and an intermediate layer that is provided between the substrate and the three-dimensional element and bonds the substrate and the three-dimensional element together, such that one side of each three-dimensional element faces the substrate and one side is opposite to the substrate, wherein a ratio C2 /C1 of a content of the diamond abrasive particles C2 to a content of the bonding material C1 is for example 0.33 in terms of mass ratio.

WO 2019/135180 A2 relates to a polishing sheet including: a substrate; a plurality of three-dimensional elements containing abrasive grains and a binding material; and an intermediate layer provided between the three-dimensional elements and the substrate so as to join the substrate and the three-dimensional elements.

WO 2010/011801 A2 relates to an abrasive material product comprising a substrate and an abrasive part having a plurality of shaped structures projecting from the substrate and characterized in that the abrasive part comprises an upper layer composed of a cured material of a mixture containing abrasive particles dispersed in a resin, and a lower layer composed of a cured material of a binder agent containing a radiation-curable monomer and/or oligomer and a thermosetting resin.

### Summary

### Technical Problem

In order to form a uniform smooth surface on an object to be polished, it was common for the polishing material in the related art to perform polishing of the next object to be polished with a new polishing surface or a new polishing material without reusing the polishing surface obtained by polishing one object to be polished.

An object of the present invention is to provide a polishing sheet and a polishing method that can efficiently polish an object to be polished to form a smooth surface with low convexities and concavities, and can form a uniform smooth surface even when repeated polishing is performed on the same polishing surface.

### Solution to Problem

The invention is set out in the appended set of claims.

One aspect of the present invention relates to a polishing sheet as defined in claim 1.

Another aspect of the present invention relates to a polishing method for polishing a plurality of objects to be polished as defined in claim 8.

### Advantageous Effects of Invention

According to the present invention, there is provided a polishing sheet that can efficiently polish an object to be polished to form a smooth surface with low convexities and concavities, and can form a uniform smooth surface even when repeated polishing is performed on the same polishing surface. Additionally, according to the present invention, there is provided a polishing method capable of efficiently polishing an object to be polished using the polishing sheet.

### Brief Description of the Drawings

FIG. 1 is a cross-sectional view illustrating an aspect of a polishing sheet.
FIG. 2 is a cross-sectional view illustrating another aspect of the polishing sheet.
FIG. 3(a) is a diagram illustrating one aspect of the three-dimensional shape of the polishing sheet, and FIG. 3(b) is a diagram illustrating another aspect of the three-dimensional shape of the polishing sheet.
FIG. 4(a) is a diagram illustrating one aspect of the three-dimensional shape of the polishing sheet, and FIG. 4(b) is a diagram illustrating another aspect of the three-dimensional shape of the polishing sheet.

### Detailed Description

Preferred embodiments of the present invention are described below with reference to the drawings. Note that identical elements have been assigned identical codes in the explanation of the drawings, and duplicate explanations are omitted. Furthermore, the drawings are drawn with some portions being exaggerated in order to ease understanding, and the dimensional ratios and the like are not limited to those shown in the drawings.

### Polishing sheet

The polishing sheet according to the present embodiment includes a substrate, a plurality of three-dimensional elements that includes diamond abrasive particles and a bonding material, and forms a polishing surface, and an intermediate layer that is provided between the substrate and the three-dimensional element and bonds the substrate and the three-dimensional element together.

In the present embodiment, a ratio C₂/C₁ of a content of the diamond abrasive particles C₂ to a content of the bonding material C₁ is 0.05 to 1.5 in terms of mass ratio.

In the polishing sheet according to the present embodiment, a hard material such as a metal product can be efficiently polished to form a smooth surface with low convexities and concavities, and to form a uniform smooth surface even when repeated polishing (for example, greater than or equal to 10) is performed on the same polishing surface. Note that if the ratio C₂/C₁ is greater than 1.5, when repeated polishing is performed on the same polishing surface, the smooth surface to be formed gradually becomes rough, and therefore, it is difficult to form a uniform smooth surface. In addition, if the ratio C₂/C₁ is less than 0.05, when repeated polishing is performed on the same polishing surface, the polishing performance greatly decreases, and therefore, it is difficult to remove convexities and concavities.

Although the reasons for achieving the above effect are not necessarily clear, it is considered that when the ratio C₂/C₁ is greater than 1.5, due to the large amount of grinding and the tendency for a large amount of polishing debris to be generated, the rigidity of the three-dimensional element, and capacity to lower discharge polishing debris from the polishing surface, the polishing debris easily adheres to the polishing surface, and the adhering of the polishing debris is one of the causes of the roughness of the smooth surface during repeated polishing. In addition, it is considered that when the ratio C₂/C₁ is less than 0.05, due to the small number of diamond abrasive particles, the polishing performance is significantly deteriorated due to the polishing of the diamond abrasive particles, and therefore, sufficient polishing performance cannot be maintained during repeated polishing. That is, it is considered that when the ratio C₂/C₁ is within the range described above, the adhesion of polishing debris to the polishing surface is suppressed, and the amount of the abrasive particles that can maintain sufficient polishing performance during the repeated polishing can be obtained.

Hereinafter, a preferred embodiment of the polishing sheet will be described in detail with reference to the drawings.

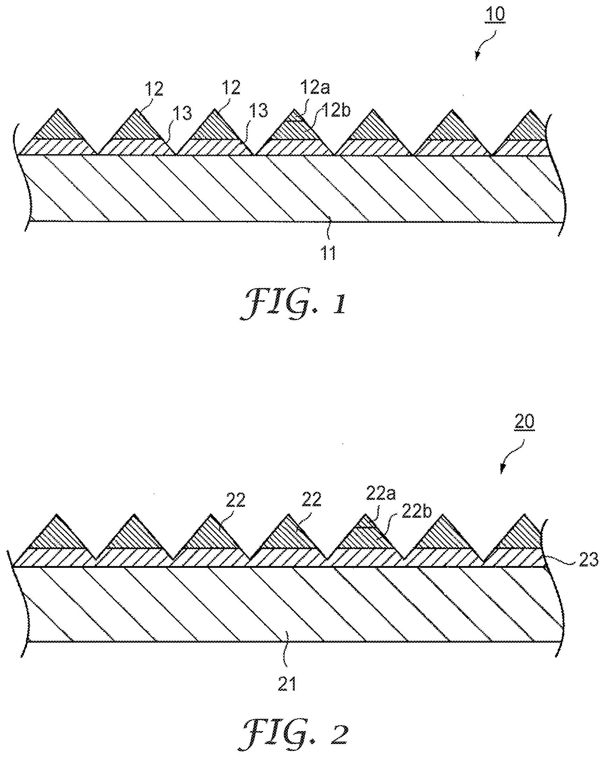

FIG. 1 is a cross-sectional view illustrating a preferred aspect of the polishing sheet. The polishing sheet 10 illustrated in FIG. 1 includes a substrate 11, a three-dimensional element 12 including diamond abrasive particles and a bonding material, and an intermediate layer 13 disposed between the substrate 11 and the three-dimensional element 12 and bonding the three-dimensional element 12 onto one surface of the substrate 11.

Examples of the substrate 11 include a paper substrate, a fabric substrate, a sponge substrate, a resin film, and a metal film.

Examples of the paper substrate include kraft paper, impregnated paper, coated paper, and synthetic paper. Examples of the fabric substrate include cotton fabrics, rayon fabrics, polyester fabrics, or blends of these materials. Furthermore, examples of the sponge substrate include polyurethane foam, polyethylene foam, and melamine foam.

The substrate 11 preferably includes a smooth surface in contact with the intermediate layer 13, and preferably includes a resin film and/or a metal film from the viewpoint of easily obtaining smoothness. Examples of the resin film include a polyester film, a polyimide film, and a polyamide film. The metal film is preferably a metal foil, and examples thereof include aluminum foil and copper foil from the viewpoint of having high thermal conductivity and an expected frictional heat release. The substrate **11** may be a stack formed by stacking a plurality of resin films, a stack formed by stacking a plurality of metal films, or a stack including a resin film and a metal film.

A surface treatment may be performed on the surface of the substrate **11** opposite the intermediate layer 13 for the purpose of, for example, improving the suitability of the polishing instrument. Examples of the surface treatment include a roughening treatment by sandblasting, formation of a slip resistant layer using an inorganic particle-containing resin, imparting an adhesive layer by a sensitive adhesive, and the like.

The thickness of the substrate **11** is not particularly limited, for example, it may be greater than or equal to 15 µm, or may be greater than or equal to 60 µm. Further, for example, the thickness of the substrate 11 may be less than or equal to 500 µm, or may be less than or equal to 350 µm. When the thickness of the substrate 11 is increased, breakage of the substrate during high load polishing is significantly suppressed, and the stability of the high load polishing is improved. Furthermore, when the thickness of the substrate 11 is decreased, followability with respect to the object to be polished is further improved.

The substrate 11 preferably has a Young's modulus at 25°C of greater than or equal to 3.0 × 10⁹ Pa. By having such a substrate 11, it becomes easier to slide the polishing sheet 10 with respect to the fixed hard material, resulting in a polishing sheet 10 having excellent suitability for the high load polishing.

The Young's modulus of the substrate 11 at 25°C is more preferably greater than or equal to 3.5 × 10⁹ Pa, and more preferably greater than or equal to 3.8 × 10⁹ Pa, from the viewpoint of obtaining more remarkable effects. Note that, in a case where the substrate 11 is a metal film, the Young's modulus of the substrate 11 at 25°C may be even greater, for example, greater than or equal to 10 × 10⁹ Pa, or greater than or equal to 20 × 10⁹ Pa.

An upper limit of the Young's modulus at 25°C of the substrate 11 is not particularly limited. The Young's modulus of the substrate 11 at 25°C is preferably less than or equal to 250 × 10⁹ Pa, and more preferably less than or equal to 150 × 10⁹ Pa, from the viewpoint of processability into a rolled product. Note that, in a case where the substrate 11 is a resin film, the Young's modulus of the substrate 11 at 25°C may be even less, for example, less than or equal to 20 × 10⁹ Pa, or less than or equal to 15 × 10⁹ Pa.

Note that in the present specification, the Young's modulus of the substrate is a value measured by testing the tensile properties of the film in accordance with ISO 527-3.

The substrate 11 preferably has a breaking elongation of less than or equal to 200%. Such a substrate 11 is able to more firmly fix the three-dimensional elements 12 during the high load polishing, and tends to further improve the polishing performance.

From the viewpoint of obtaining more remarkable the effects, the breaking elongation of the substrate 11 is more preferably less than or equal to 180%, and still more preferably less than or equal to 150%. Note that, in a case where the substrate 11 is a metal film, the breaking elongation of the substrate 11 may be even less, for example, less than or equal to 40%, or less than or equal to 30%.

A lower limit of the breaking elongation of the substrate 11 is not particularly limited, for example, it may be greater than or equal to 1% and greater than or equal to 3%. Note that, in a case where the substrate 11 is a resin film, the breaking elongation of the substrate 11 may be even greater, for example, greater than or equal to 20%, or greater than or equal to 40%.

Note that, in the specification, the breaking elongation of the substrate represents a value measured in accordance with JIS K 7127.

The three-dimensional element 12 includes diamond abrasive particles (hereinafter, simply referred to as "abrasive particles") for polishing the object to be polished, and a bonding material that bonds the abrasive particles. With the three-dimensional element 12, a convex portion that is in contact with the object to be polished and a concave portion that is not in contact with the object to be polished are formed on the polishing surface of the polishing sheet 10. In other words, the three-dimensional element 12 in the polishing sheet 10 can be an element provided such that the polishing surface has a convex portion and a concave portion.

The polishing sheet 10 includes a plurality of three-dimensional elements 12, and the three-dimensional elements 12 are independently formed. With such a configuration, the plurality of three-dimensional elements 12 can each follow the convexities and concavities of the object to be polished during the high load polishing.

The average particle size of the abrasive particles may be appropriately selected according to the application of the polishing sheet 10. The average particle size of the abrasive particles is greater than or equal to 2 µm, preferably greater than 5 µm, preferably greater than 9 µm. When the average particle size of the abrasive particles is large, it becomes easier to manufacture the polishing sheet satisfying the ratio C₂/C₁ described below. Further, the average particle size of the abrasive particles is less than or equal to 30 µm.

Note that, in the present specification, the average particle size of the abrasive particles is a volume cumulative particle size D50 measured by using a laser diffraction/scattering type particle size distribution measurement. The specific measurement conditions are as follows, but use of other measuring instruments and conditions is not limited as long as those skilled in the art can understand that equivalent values can be obtained based on the same principle.
- Measuring instrument: Laser diffraction/scattering type particle size distribution measuring instrument LA-920 (Horiba, Ltd., Kyoto, Kyoto Prefecture)
- Analysis software: LA-920 for Windows (registered mark)
- Abrasive particle amount: 150 mg
- Dispersion medium: Ion exchange water 150 mL
- Circulation speed (stirring speed of water): Set value 15
- Ultrasonic oscillation: Presence (using an ultrasonic instrument with built-in LA-920)
- Measuring temperature: Room temperature (25°C)
- Relative humidity: less than or equal to 85%
- He-Ne laser optical transmittance: 85%
- Tungsten lamp transmittance: 85%
- Relative refractive index: set to 1.80 (relative refractive index of diamond: 1.81)
- Measuring time: 20 seconds
- Number of data captured: 10
- Particle diameter criteria: Volume

The number of abrasive particles is defined in accordance with JIS R-6001-2: 2017, and may be, for example, #240 to #20000, and preferably #400 to #2000.

The bonding material can be a matrix that disperses the abrasive particles. The bonding material may be, for example, a cured product of a thermosetting resin composition or a cured product of a photocurable resin composition.

The bonding material preferably has a Young's modulus at 25°C of greater than or equal to 1.0 × 10⁹ Pa. According to such a bonding material, the shape of the three-dimensional element 12 can be sufficiently maintained even under high loads, and the polishing force with respect to the object to be polished tends to be significantly expressed.

From the viewpoint of obtaining more remarkable effects, Young's modulus of the bonding material at 25°C is more preferably greater than or equal to 2.0 × 10⁹ Pa, and still more preferably greater than or equal to 4.0 × 10⁹ Pa The upper limit of the Young's modulus of the bonding material at 25°C is not particularly limited, and may be, for example, less than or equal to 20 × 10⁹ Pa, or may be less than or equal to 15 × 10⁹ Pa.

Note that in the present specification, the Young's modulus of the bonding material represents a value of a complex elastic modulus calculated from the results of this measurement of dynamic visco-elasticity measured by bending vibration at a frequency of 1 Hz in accordance with ISO 6721-5 under the following conditions.

### (Measurement conditions)

- Measuring instrument: Solids Analyzer RSA III, manufactured by Rheometric Scientific
- Measurement mode: Three Point Bending
- Distance between support ends: 40 mm
- Frequency: 1 Hz
- Test specimen general dimension: 10 mm in width × 50 mm in length × 2 mm in thickness
- Distortion: 0.05%

In one preferred aspect, the bonding material may include a phenolic resin. Such a bonding material is susceptible to obtaining a suitable Young's modulus as described above.

In another preferred aspect, the bonding material may be a cured product of a resin composition containing an acrylic monomer. The acrylic monomer is a compound having at least one type of polymerizable group selected from the group consisting of an acryloyl group and a methacryloyl group. The resin composition is cured by polymerization of an acrylic monomer to form a cured product constituting the bonding material.

The resin composition may be a polyfunctional monomer in which greater than or equal to 60 mass% of an acrylic monomer is selected from the group consisting of tris(2-hydroxyethyl) isocyanurate triacrylate and tris(2-hydroxyethyl) isocyanurate diacrylate. As a result, a bonding material having a high compressive yield stress is formed, so that the bonding material can be deformed while maintaining the pressure on the polishing surface during the high load polishing, thereby improving the adhesion to the hard material and obtaining a high polishing force.

The content of the polyfunctional monomer in the acrylic monomer is preferably greater than or equal to 65 mass%, and more preferably greater than or equal to 85 mass%, and may be greater than or equal to 95 mass%, greater than or equal to 99 mass%, or greater than or equal to 100 mass%.

The resin composition may further contain an acrylic monomer other than the polyfunctional monomer. The other acrylic monomer preferably has a glass transition temperature of greater than or equal to 25°C in a single polymer. As other acrylic monomers, examples of the monofunctional monomer include isobornyl (meth)acrylate, dicyclopentanyl (meth)acrylate, and dicyclopentenyl (meth)acrylate, examples of the bifunctional monomer include tricyclodecanemethanol di(meth)acrylate and bisphenol A ethylene oxide-modified di(meth)acrylate, examples of the polyfunctional monomer include trimethylolpropane triacrylate, pentaerythritol triacrylate, pentaerythritol tetraacrylate, ditrimethylolpropane tetraacrylate, dipentaerythritol pentaacrylate, dipentaerythritol hexaacrylate, and ε-caprolactone-modified tris-(2-acryloxyethyl) isocyanurate.

The content of the acrylic monomer in the resin composition may be, for example, greater than or equal to 90 mass%, preferably greater than or equal to 95 mass%, and more preferably greater than or equal to 99 mass%, based on the total amount of solids in the resin composition. The upper limit of the content of the acrylic monomer in the resin composition is not particularly limited.

The resin composition may further contain a polymerization initiator for initiating polymerization of the acrylic monomer. Examples of the polymerization initiator include a thermal polymerization initiator and a photopolymerization initiator, and among these, the photopolymerization initiator for initiating free radical polymerization is preferable. As a photopolymerization initiator, examples of an intramolecular cleavage type include a benzoin derivative, benzyl ketal, α-hydroxyacetophenone, α-aminoacetophenone, and acylphosphine oxide, titanocenes, O-acyloximes, and examples of a hydrogen abstraction type include benzophenone, Michler ketone, and thioxanthone.

The content of the polymerization initiator in the resin composition may be changed as appropriate in accordance with the type or the like of the polymerization initiator. The content of the polymerization initiator in the resin composition may be, for example, greater than or equal to 0.1 parts by mass, preferably greater than or equal to 0.5 parts by mass, and more preferably greater than or equal to 1.0 parts by mass, based on 100 parts by mass of the acrylic monomer. Furthermore, the content of the polymerization initiator in the resin composition may be, for example, less than or equal to 10 parts by mass, preferably less than or equal to 5 parts by mass, and more preferably less than or equal to 3 parts by mass, based on 100 parts by mass of the acrylic monomer.

The resin composition may further contain other components other than the acrylic monomer and the polymerization initiator. Examples of other components include a coupling agent, a wetting agent, a dye, a pigment, a plasticizer, a filler, a striper, a polishing aids, and other additives.

In the three-dimensional element 12, the ratio C₂/C₁ (mass ratio) of the content C₂ of the abrasive particles to the content of the bonding material C₁ is greater than or equal to 0.05, and preferably greater than or equal to 0.1. Further, the ratio C₂/C₁ (mass ratio) is less than or equal to 1.5, preferably 1.0 or less, and more preferably less than or equal to 0.7 from the viewpoint of obtaining more remarkable the effects. Furthermore, from the viewpoint of reducing and suppressing the amount of diamond used, the ratio C₂/C₁ (mass ratio) may be, for example, less than or equal to 1.5, may be less than or equal to 1.0, may be less than or equal to 0.7, may be less than or equal to 0.5, or may be less than or equal to 0.2.

When the three-dimensional element 12 is bisected into a top portion 12a on the side opposite to the substrate 11 that occupies 20 vol% of the three-dimensional element 12 and a base portion 12b on the side of the substrate 11 that occupies 80 vol% of the three-dimensional element 12, the abrasive particles of greater than or equal to 50 mass% in the three-dimensional element 12 is positioned on the top portion 12a.

As described above, when the amount of abrasive particles in the top portion 12a is large, the polishing performance can be efficiently exhibited with a small amount of abrasive particles, and the effects described above are more remarkably exhibited. More specifically, since the top portion 12a is a portion constituting the polishing surface, the abrasive particles are selectively present on the top portion 12a, and therefore, high polishing performance can be exhibited with a small amount of the abrasive particles. Additionally, since the base portion 12b is a portion constituting a concave groove that discharges the abrasive debris, it is considered that as the abrasive particle amount is reduced, the discharge properties of the polishing debris are further improved, the adhesion of the abrasive debris to the polishing surface is suppressed, and a more uniform smooth surface is easily obtained.

From the viewpoint of obtaining more remarkable the effects, the amount of abrasive particles contained in the top portion 12a is more preferably greater than or equal to 55 mass%, and more preferably greater than or equal to 60 mass% of the abrasive particles in the three-dimensional element 12.

In FIG. 1, the three-dimensional element 12 is described as having a triangular cross section, but the shape of the three-dimensional element 12 is not necessarily limited to this shape. The three-dimensional element 12 may have, for example, a pyramid structure that bonds the intermediate layer 13 with a convex portion as an apex on the bottom surface. Furthermore, the three-dimensional element 12 may have a triangular prism structure in which, for example, a convex portion is formed on one side and is bonded to the intermediate layer 13 on a side surface opposing the side.

In addition, the three-dimensional element 12 may have, for example, a pillar structure that forms a convex portion on one bottom surface and bonds to the intermediate layer 13 on the other bottom surface. In addition, the three-dimensional element 12 may have, for example, a frustum structure that forms a convex portion on one bottom surface and bonds to the intermediate layer 13 on the other bottom surface.

The three-dimensional element 12 may have a multilayer structure. For example, the three-dimensional element 12 may be formed of a polishing material layer formed of abrasive particles and a bonding material, and a support layer formed from a bonding material.

The height of the three-dimensional element 12 (height from the concave portion to the convex portion of the polishing surface) may be from 2 to 800 µm, and may be from 4 to 400 µm.

The intermediate layer 13 is a layer that is disposed between the substrate 11 and the three-dimensional element 12 and bonds the substrate 11 and the three-dimensional element 12 together.

The Young's modulus of the intermediate layer 13 at 25°C is preferably greater than or equal to 1.0 × 10⁷ Pa. Since the three-dimensional element 12 can be sufficiently fixed on the substrate 11, the intermediate layer 13 can sufficiently suppress the three-dimensional element 12 from falling out during polishing.

From the viewpoint of exhibiting more remarkable effects, the Young's modulus of the intermediate layer 13 at 25°C is preferably greater than or equal to 3.0 × 10⁷ Pa, and more preferably greater than or equal to 5.0 × 10⁷ Pa.

In addition, the Young's modulus of the intermediate layer 13 at 25°C is preferably less than or equal to 5.0 × 10⁸ Pa. Such an intermediate layer 13 functions as a buffer layer during high load polishing, and the plurality of three-dimensional elements 12 can follow the convexities and concavities of the object to be polished. Thus, with this intermediate layer 13, smooth surfaces with low convexities and concavities can be easily formed.

From the viewpoint of exhibiting more remarkable effects, the Young's modulus of the intermediate layer 13 at 25°C is preferably less than or equal to 4.0 × 10⁸ Pa, and more preferably less than or equal to 2.0 × 10⁸ Pa.

Note that, the Young's modulus of the intermediate layer represents a value of a complex elastic modulus calculated from the results of this measurement of dynamic visco-elasticity measured by bending vibration at a frequency of 1 Hz in accordance with ISO 6721-5 under the following conditions.

### (Measurement conditions)

- Measuring instrument: Solids Analyzer RSA III, manufactured by Rheometric Scientific
- Measurement mode: Three Point Bending
- Distance between support ends: 40 mm
- Frequency: 1 Hz
- Test specimen general dimension: 10 mm in width × 50 mm in length × 2 mm in thickness
- Distortion: 0.05%

The constituent material of the intermediate layer 13 is not particularly limited as long as it is capable of bonding the substrate 11 and the three-dimensional element 12 to each other. The intermediate layer 13 may be formed of a cured product of a thermosetting resin composition or may be formed of a cured product of a photocurable resin composition.

In one preferred aspect, the intermediate layer 13 may be formed of a cured product of a resin composition containing urethane acrylate. Such an intermediate layer 13 tends to be easily compatible with the above-described suitable Young's modulus and the strong adhesive strength between the substrate 11 and the three-dimensional element 12.

The urethane acrylate can be a polymerizable compound having a urethane bond and at least one type of polymerizable group selected from the group consisting of an acryloyl group and a methacryloyl group. Specific examples of urethane acrylate include polyester skeletoncontaining urethane acrylate, polyetherskeleton-containing urethane acrylate, aliphatic urethane acrylate, and aromatic urethane acrylate.

The resin composition may further contains other polymerizable compounds other than the urethane acrylate. The other polymerizable compound may be selected appropriately from a compound capable of copolymerizing with the urethane acrylate. Examples of other polymerizable compounds include tetrahydrofurfuryl (meth)acrylate, 2-phenoxyethyl (meth)acrylate, benzyl (meth)acrylate, cyclic trimethylolpropane formal acrylate, glycidyl methacrylate, and (meth)acrylic acid. Furthermore, the resin composition may further contain a polymerizable compound that does not copolymerize with a urethane acrylate such as an epoxy resin.

The proportion of the urethane acrylate in the polymerizable compound in the resin composition is, for example, greater than or equal to 40 mass%, preferably greater than or equal to 50 mass%, and more preferably greater than or equal to 70 mass%. With this, it becomes easier to obtain the above-described suitable Young's modulus.

The upper limit of the proportion of the urethane acrylate in the polymerizable compound in the resin composition is not particularly limited, and may be, for example, less than or equal to 99.9 mass% or may be less than or equal to 99 mass%.

The resin composition may further contain a polymerization initiator for initiating polymerization of the urethane acrylate. Examples of the polymerization initiator include a thermal polymerization initiator and a photopolymerization initiator, and among these, the photopolymerization initiator for initiating free-radical polymerization is preferable. As a photopolymerization initiator, examples of an intramolecular cleavage type include a benzoin derivative, benzyl ketal, α-hydroxyacetophenone, α-aminoacetophenone, and acylphosphine oxide, titanocenes, O-acyloximes, and examples of a hydrogen abstraction type include benzophenone, Michler ketone, and thioxanthone.

The content of the polymerization initiator in the resin composition may be changed as appropriate in accordance with the type or the like of the polymerization initiator. The content of the polymerization initiator in the resin composition may be, for example, greater than or equal to 0.1 parts by mass, preferably greater than or equal to 0.5 parts by mass, and more preferably greater than or equal to 1.0 parts by mass, based on 100 parts by mass of the polymerizable compound. Furthermore, the content of the polymerization initiator in the resin composition may be, for example, less than or equal to 50 parts by mass, preferably less than or equal to 20 parts by mass, and more preferably less than or equal to 10 parts by mass, based on 100 parts by mass of the polymerizable compound.

The resin composition may further contain other components other than the polymerizable compound and the curing agent. Examples of other components include a coupling agent, a wetting agent, a dye, a pigment, a plasticizer, a filler, and other additives.

In the polishing sheet 10, the intermediate layer 13 is formed in a three-dimensional manner with the three-dimensional element 12, and forms a recess of the polishing surface. In addition, the polishing sheet 10 includes a plurality of intermediate layers 13, and each of the plurality of intermediate layers 13 is bonded to one three-dimensional element 12 and the substrate 11. In other words, in the polishing sheet 10, one three-dimensional element 12 is provided on one intermediate layer 13.

In the present embodiment, the shape of the intermediate layer is not limited to the shape described above. For example, the polishing sheet may have a plurality of three-dimensional elements bonded to the three-dimensional element by one intermediate layer. In other words, a plurality of three-dimensional elements may be provided on one intermediate layer.

In the present embodiment, the total volume of the three-dimensional elements with respect to the total volume of the three-dimensional elements and the intermediate layer is, for example, greater than or equal to 55 vol%, preferably greater than or equal to 60 vol%, and more preferably greater than or equal to 70 vol%. This tends to increase the length of the polishing sheet. The total volume of the three-dimensional elements with respect to the total volume of the three-dimensional elements and the intermediate layer is, for example, less than or equal to 95 vol%, preferably less than or equal to 90 vol%, and more preferably less than or equal to 85 vol%. As a result, the adhesion between the substrate and the intermediate layer, and the adhesion between the intermediate layer and the three-dimensional element are further improved, and the polishing force of the polishing sheet is more stable and a uniform smooth surface is more easily obtained.

FIG. 2 is a cross-sectional view illustrating another aspect of the polishing sheet. A polishing sheet 20 illustrated in FIG. 2 includes a substrate 21, a plurality of three-dimensional elements 22, and an intermediate layer 23 disposed between the substrate 11 and the plurality of three-dimensional element 22 and bonding the plurality of three-dimensional elements onto one surface of the substrate 11. The intermediate layer 23 is bonded to the substrate 11 on one surface side and the plurality of three-dimensional elements 22 on the other surface side. The surface of the intermediate layer 23 on the side in contact with the three-dimensional element 22 is formed in a three-dimensional manner with the three-dimensional element 22, and forms a concave portion of the polishing surface.

The substrate 21 and the three-dimensional elements 22 may be the same as the substrate 11 and the three-dimensional elements 12 in the polishing sheet 10, and the intermediate layer 23 may have the same shape as the intermediate layer 23 in the polishing sheet 10. When the three-dimensional element 22 is bisected into a top portion 22a that occupies 20 vol% of the three-dimensional element 22 and a base portion 22b that occupies 80 vol% of the three-dimensional element 22, the abrasive particles of greater than or equal to 50 mass% in the three-dimensional element 22 is preferably positioned on the top portion 22a.

Note that while the intermediate layer 23 is formed in a three-dimensional manner with the three-dimensional element 22 and forms a three-dimensional shape on the polishing surface, the intermediate layer 23 does not necessarily have to be formed in a three-dimensional manner, and the three-dimensional elements 22 may be provided on the smooth surface of the intermediate layer 23.

In the present embodiment, a three-dimensional shape is formed on the polishing surface of the polishing sheet by three-dimensional elements (sometimes three-dimensional elements and intermediate layers). Hereinafter, a preferred embodiment of the three-dimensional shape will be described with reference to the drawings.

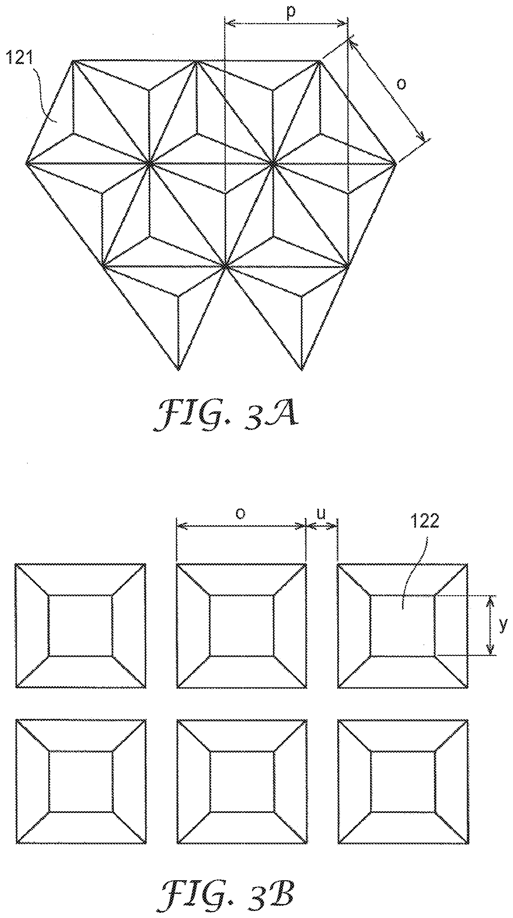

FIG. 3(a) is a top view illustrating one aspect of the three-dimensional shape of the polishing sheet. A three-dimensional portion 121 has a pyramid structure (triangular pyramid structure) in which an apex forms a convex portion and is bonded to the substrate side at the bottom surface. In FIG. 3(a), a plurality of the three-dimensional portions 121 are in contact with each other on the bottom side of the pyramid structure, but the plurality of three-dimensional portions 121 may be separated from each other.

In FIG. 3(a), reference sign o represents a bottom side length of the three-dimensional portion 121, and reference sign p represents a distance between the apexes of adjacent three-dimensional portions 121. The sign o may be, for example, from 5 µm to 1000 µm, and is preferably from 10 µm to 500 µm. The sign p may be, for example, from 5 µm to 1000 µm and is preferably from 10 µm to 500 µm.

FIG. 3(b) is a top view illustrating another aspect of the three-dimensional shape of the polishing sheet. A three-dimensional portion 122 has a frustum structure that forms a convex portion on one bottom surface and bonds to the substrate side on the other bottom surface. In FIG. 3(b), the plurality of three-dimensional portions 122 are separated from each other, but the plurality of three-dimensional portions 122 may be in contact with each other on the bottom side of the substrate side.

In FIG. 3(b), reference sign o represents a bottom side length of the three-dimensional portion 122 on the substrate side, reference sign u represents a distance between the bottom sides of adjacent three-dimensional portions 122, and reference sign y represents a bottom side length on the side that forms a convex portion of the three-dimensional portion 122. The sign o may be, for example, from 5 µm to 2000 µm, and is preferably from 10 µm to 1000 µm. The sign u may be, for example, from 0 µm to 1000 µm, and is preferably from 2 µm to 500 µm. The sign y may be, for example, from 0.5 µm to 1800 µm, and is preferably from 1 µm to 900 µm.

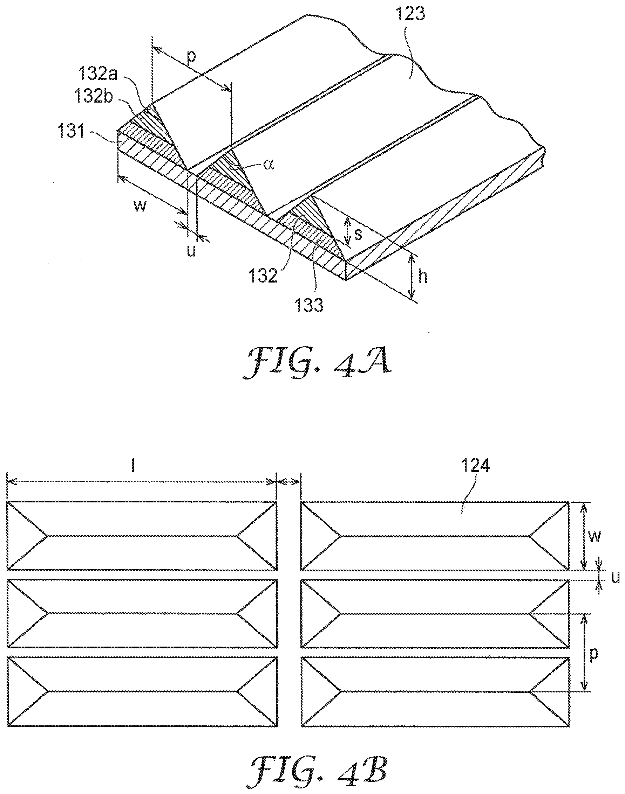

FIG. 4(a) is a perspective cross-sectional view illustrating another aspect of the three-dimensional shape of the polishing sheet. The three-dimensional portion 123 has a triangular prism structure that forms a convex portion on one side and is bonded to the substrate side on a side surface opposing the side. The three-dimensional portion 123 has a multilayer structure including a three-dimensional element 132 and an intermediate layer 133. When the three-dimensional element 132 is bisected into a top portion 132a that occupies 20 vol% of the three-dimensional element 132 and a base portion 132b that occupies 80 vol% of the three-dimensional element 132, the abrasive particles of greater than or equal to 50 mass% in the three-dimensional element 132 is preferably positioned on the top portion 132a.

In FIG. 4(a), the three-dimensional element having a triangular prism structure and a multilayer structure are illustrated; however, the three-dimensional portion having a triangular prism structure does not have a multilayer structure and may be formed only of three-dimensional elements.

A top angle α of the three-dimensional portion 123 may be from 30° to 150°, for example, and from 45° to 140°. In FIG. 4(a), reference sign h represents a height of the three-dimensional portion 123, and reference sign s represents a height of the three-dimensional element 132. The sign h may be, for example, from 10 µm to 10000 µm, and is preferably from 20 µm to 1000 µm. The sign s may be, for example, from 5% to 95% of a height h of the three-dimensional portion, and is preferably from 10% to 90%.

In FIG. 4(a), reference sign w represents a length of the short bottom side of the three-dimensional portion 123 (width of the three-dimensional portion 123), reference sign p represents a distance between the apexes of the three-dimensional portion 123, and reference sign u represents a distance between long bottom sides of adjacent three-dimensional portions 123. The sign w may be, for example, from 2 µm to 2000 µm, and is preferably from 4 µm to 1000 µm. The sign p may be, for example, from 2 µm to 4000 µm, and is preferably from 4 µm to 2000 µm. The sign u may be, for example, from 0 µm to 2000 µm, and is preferably from 0 µm to 1000 µm.

The length of the three-dimensional portion 123 (length of the long bottom side) may be extended across the entire area of the polishing sheet. In this case, both end portions in the long bottom side direction of the three-dimensional portion 123 are in the vicinity of the end portion of the polishing sheet, and the plurality of three-dimensional portions 123 is arranged in a striped shape.

Further, the length of the long bottom side of the three-dimensional portion 123 may be an appropriate length, for example, 5 µm to 10000 µm. An example of this case is illustrated in FIG. 4(b). In FIG. 4(b), an end surface of a three-dimensional portion 124 has a shape that is cut off at an acute angle from below, but the end surface of the three-dimensional portion 124 is not limited to such a shape.

In FIG. 4(b), reference sign 1 represents a length of the long bottom side of the three-dimensional portion 124, and reference sign x represents a distance between the short bottom sides of adjacent three-dimensional portions 124. The sign 1 may be, for example, from 5 µm to 10000 µm, and is preferably from 10 µm to 5000 µm. The sign x may be, for example, from 0 µm to 2000 µm, and is preferably from 0 µm to 1000 µm.

The polishing sheet according to the present embodiment can sufficiently reduce the convexities and concavities of a target surface during polishing under high load. Therefore, the polishing sheet described above can be suitably used in applications for the high load polishing. In other words, the polishing sheet described above may be a polishing sheet for high load polishing.

The load in the high load polishing may be, for example, greater than or equal to 1.0 × 10⁶ Pa, preferably greater than or equal to 1.2 × 10⁶ Pa, and more preferably greater than or equal to 1.5 × 10⁶ Pa. In addition, the load in the high load polishing may be, for example, less than or equal to 5.0 × 10⁶ Pa, and is preferably less than or equal to 3.0 × 10⁶ Pa.

Further, since the polishing sheet according to the present embodiment is suitable for the high load polishing, it can be suitably used for polishing hard materials such as metal products. In other words, the polishing sheet may be a polishing sheet for polishing a hard material.

The hard material refers to, for example, a material having a Vickers hardness of greater than or equal to HV150 as defined in ISO 8486-2: 2007. Examples of the hard material include carbon steel, stainless steel, titanium, tungsten, and ceramic materials such as silicon carbide, aluminum nitride, zirconia, and alumina.

### (Polishing method)

A polishing method according to the present embodiment is a polishing method for polishing a plurality of an object to be polished using the polishing sheet described above. The polishing method according to the present embodiment includes a first polishing step of pressing the polishing surface of the polishing sheet against the object to be polished to slide the polishing sheet and the object to be polished, and a reuse step of polishing another object to be polished using at least a portion of the polishing surface used in the first polishing step.

In the first polishing step, a load when the polishing sheet is pressed against the object to be polished may be a high load of, for example, greater than or equal to 1.0 × 10⁶ Pa. The load is preferably greater than or equal to 1.2 × 10⁶ Pa, and more preferably greater than or equal to 1.5 × 10⁶ Pa, for example. An upper limit of the load may be, for example, less than or equal to 5.0 × 10⁶ Pa, and is preferably less than or equal to 3.0 × 10⁶ Pa.

The sliding of the polishing sheet and the object to be polished may be performed by fixing one and sliding the other, or by sliding both of them. In the present embodiment, among these, a method of fixing the object to be polished and sliding the polishing sheet is particularly preferable.

The object to be polished is not particularly limited, but from the viewpoint of obtaining remarkable effects by using the polishing sheet described above, the object to be polished is preferably the hard material described above.

In the present embodiment, a lubricating liquid may be interposed when sliding the polishing sheet and the object to be polished. The lubricating liquid is broadly classified as a water-soluble lubricating liquid and a water-insoluble lubricating liquid. Examples of the water-soluble lubricating liquid include a soluble type, a solution type, and an emulsion type, and any of these may be used. In addition, examples of the water-insoluble lubricating liquid include a lubricating liquid made of mineral oil and/or fat oil, which may or may not contain an extreme pressure additive.

In the present embodiment, the reuse step may be performed a plurality of times (for example, 10 times or more, preferably 15 times or more, and more preferably 20 times or more), a plurality (for example, 10, preferably 15 or more, and more preferably 20 or more) of the objects to be polished may be polished with the same polishing surface. Note that the polishing method in the reuse step may be the same as the first polishing step.

Although descriptions were given above for the preferred embodiments of the present invention, the present invention is not limited to the aforementioned embodiments.

### Examples

Hereinafter, the present invention will be described more specifically with reference to examples. However, the present invention is not limited to the examples.

### Example A-1

### Preparation of Composition for Forming Three-Dimensional Element

A composition for forming a three-dimensional element was prepared by mixing 62.33 parts by mass of tris(2-hydroxyethyl) isocyanurate triacrylate (SR368, available from Arkema), 0.06 parts by mass of silane coupling agent (KBM-503, available from Shin-Etsu Chemical Co., Ltd.), 1.25 parts by mass of photopolymerization initiator (Omunirad 819, available from IGM Resins), 0.62 parts by mass of photopolymerization initiator (Omunirad 369, available from IGM Resins), 5.52 parts by mass of diamond abrasive particles (average particle size of 15 µm), and 30.22 parts by mass of propylene glycol methyl ether. The ratio of the content of diamond abrasive particles to the content of resin content in the composition was 0.09.

### Preparation of Composition for Forming Intermediate Layer

A composition for forming an intermediate layer was prepared by mixing 78.43 parts by mass of urethane acrylate (CN991, available from Arkema), 19.61 parts by mass of acrylate monomer (Bizcoat #150, available from OSAKA ORGANIC CHEMICAL INDUSTRY LTD), and 1.96 parts by mass of photopolymerization initiator (Omunirad 819, available from IGM Resins).

### Preparation of Substrate

As a substrate, a PET film (thickness of 125 µm, Young's modulus at 25°C was 5.0 MPa) was prepared.

### Production of Polishing Sheet

A polypropylene shaped film having a recess corresponding to a three-dimensional shape illustrated in FIG. 3(a) on a surface was prepared. By applying the composition for forming a three-dimensional element on the shaped film with a bar coater, the concave portion of the shaped film was filled with the composition for forming a three-dimensional element. Then, the composition filled in the recess was dried at 75°C for 5 minutes.

Next, the composition for forming an intermediate layer was applied on the shaped film, the substrate was stacked on top thereof, and the pressure was applied with a roll. Thereafter, the substrate side was irradiated with ultraviolet radiation to cure the composition for forming an intermediate layer.

Next, the shaped film was stripped and oven heated at 70°C for 24 hours to obtain a polishing sheet. When the three-dimensional elements of the obtained polishing sheet were analyzed, it was confirmed that there were many abrasive particles on the top side due to the abrasive particles being settled in the concave portion.

### Example A-2

A composition for forming a three-dimensional element was prepared by mixing 59.35 parts by mass of tris(2-hydroxyethyl) isocyanurate triacrylate (SR368, available from Arkema), 0.09 parts by mass of silane coupling agent (KBM-503, available from Shin-Etsu Chemical Co., Ltd.), 1.19 parts by mass of photopolymerization initiator (Omunirad 819, available from IGM Resins), 0.59 parts by mass of photopolymerization initiator (Omunirad 369, available from IGM Resins), 8.76 parts by mass of diamond abrasive particles (average particle size of 15 µm), and 30.03 parts by mass of propylene glycol methyl ether. The ratio of the content of diamond abrasive particles to the content of resin content in the composition was 0.14. A polishing sheet was produced in the same manner as in Example A-1 except that this composition for forming a three-dimensional element was used.

### Example A-3

A composition for forming a three-dimensional element was prepared by mixing 52.80 parts by mass of tris(2-hydroxyethyl) isocyanurate triacrylate (SR368, available from Arkema), 0.16 parts by mass of silane coupling agent (KBM-503, available from Shin-Etsu Chemical Co., Ltd.), 1.06 parts by mass of photopolymerization initiator (Omunirad 819, available from IGM Resins), 0.53 parts by mass of photopolymerization initiator (Omunirad 369, available from IGM Resins), 15.59 parts by mass of diamond abrasive particles (average particle size of 15 µm), and 29.87 parts by mass of propylene glycol methyl ether. The ratio of the content of diamond abrasive particles to the content of resin content in the composition was 0.3. A polishing sheet was produced in the same manner as in Example A-1 except that this composition for forming a three-dimensional element was used.

### Example A-4

A composition for forming a three-dimensional element was prepared by mixing 43.07 parts by mass of tris(2-hydroxyethyl) isocyanurate triacrylate (SR368, available from Arkema), 0.25 parts by mass of silane coupling agent (KBM-503, available from Shin-Etsu Chemical Co., Ltd.), 0.86 parts by mass of photopolymerization initiator (Omunirad 819, available from IGM Resins), 0.43 parts by mass of photopolymerization initiator (Omunirad 369, available from IGM Resins), 25.42 parts by mass of diamond abrasive particles (average particle size of 15 µm), and 29.96 parts by mass of propylene glycol methyl ether. The ratio of the content of diamond abrasive particles to the content of resin content in the composition was 0.6. A polishing sheet was produced in the same manner as in Example A-1 except that the composition for forming a three-dimensional element was used.

### Example A-5

A composition for forming a three-dimensional element was prepared by mixing 23.30 parts by mass of tris(2-hydroxyethyl) isocyanurate triacrylate (SR368, available from Arkema), 0.34 parts by mass of silane coupling agent (KBM-503, available from Shin-Etsu Chemical Co., Ltd.), 0.46 parts by mass of photopolymerization initiator (Omunirad 819, available from IGM Resins), 0.23 parts by mass of photopolymerization initiator (Omunirad 369, available from IGM Resins), 34.39 parts by mass of diamond abrasive particles (average particle size of 15 µm), and 41.27 parts by mass of propylene glycol methyl ether. The ratio of the content of diamond abrasive particles to the content of resin content in the composition was 1.4. A polishing sheet was produced in the same manner as in Example A-1 except that this composition for forming a three-dimensional element was used.

### Comparative Example X-1

A composition for forming a three-dimensional element was prepared by mixing 67.22 parts by mass of tris(2-hydroxyethyl) isocyanurate triacrylate (SR368, available from Arkema), 0.01 parts by mass of silane coupling agent (KBM-503, available from Shin-Etsu Chemical Co., Ltd.), 1.34 parts by mass of photopolymerization initiator (Omunirad 819, available from IGM Resins), 0.67 parts by mass of photopolymerization initiator (Omunirad 369, available from IGM Resins), 0.99 parts by mass of diamond abrasive particles (average particle size of 15 µm), and 29.76 parts by mass of propylene glycol methyl ether. The ratio of the content of diamond abrasive particles to the content of resin content in the composition was 0.014. A polishing sheet was produced in the same manner as in Example A-1 except that this composition for forming a three-dimensional element was used.

### Comparative Example X-2

A composition for forming a three-dimensional element was prepared by mixing 65.63 parts by mass of tris(2-hydroxyethyl) isocyanurate triacrylate (SR368, available from Arkema), 0.02 parts by mass of silane coupling agent (KBM-503, available from Shin-Etsu Chemical Co., Ltd.), 1.31 parts by mass of photopolymerization initiator (Omunirad 819, available from IGM Resins), 0.66 parts by mass of photopolymerization initiator (Omunirad 369, available from IGM Resins), 1.94 parts by mass of diamond abrasive particles (average particle size of 15 µm), and 30.44 parts by mass of propylene glycol methyl ether. The ratio of the content of diamond abrasive particles to the content of resin content in the composition was 0.028. A polishing sheet was produced in the same manner as in Example A-1 except that this composition for forming a three-dimensional element was used.

### Comparative Example X-3

A composition for forming a three-dimensional element was prepared by mixing 17.29 parts by mass of tris(2-hydroxyethyl) isocyanurate triacrylate (SR368, available from Arkema), 0.51 parts by mass of silane coupling agent (KBM-503, available from Shin-Etsu Chemical Co., Ltd.), 0.31 parts by mass of photopolymerization initiator (Omunirad 819, available from IGM Resins), 0.17 parts by mass of photopolymerization initiator (Omunirad 369, available from IGM Resins), 51.06 parts by mass of diamond abrasive particles (average particle size of 15 µm), and 30.64 parts by mass of propylene glycol methyl ether. The ratio of the content of diamond abrasive particles to the content of resin content in the composition was 2.8. A polishing sheet was produced in the same manner as in Example A-1 except that this composition for forming a three-dimensional element was used.

### Evaluation of Polishing Sheet

The polishing sheets produced in examples and comparative examples were subjected to a polishing test under the following conditions, and the grinding amount (mg/30 seconds) for 30 seconds and the surface roughness Ra (µm) of the obtained smooth surface were obtained. Further, the polishing test was performed 19 times on the same polishing surface under the same conditions, and the grinding amount for 30 seconds in each time and the surface roughness Ra of the obtained smooth surface were obtained. The results of the grinding amount are shown in Table 1, and the results of the surface roughness Ra are shown in Table 2.
- Object to be polished: S45C (no heat treatment)
- Size of object to be polished: 10 mmΦ × 200 mm in length
- Polishing instrument: Super finisher (available from Matsuda Seiki Co Ltd.)
- Rotation speed: 829 rpm
- Polishing sheet feeding: None
- Oscillation: None
- Grinding liquid: Simtek 500 (available from CIMCOOL FLUIDS TECHNOLOGY) 2% aqueous solution
- Backup roll hardness: Shore A 30°
- Slit amount: 4.2 mm
- Polishing time: 30 seconds
- Cut amount: Weight loss after polishing test of object to be polished was taken as cut amount.
- Surface average roughness Ra: Measured using following instrument and conditions.
- Instrument: SURFTEST SV-3100H4 available from Mitutoyo Corporation
- Measurement conditions: JIS B-0601: 2001 (ISO 4287: 1997) compliant
- Cutoff: 0.8 mm
- Evaluation length: 4 mm

**Table 1**

| | | X-1 | X-2 | A-1 | A-2 | A-3 | A-4 | A-5 | X-3 |
|---|---|---|---|---|---|---|---|---|---|
| C₂/C₁ | | 0.014 | 0.028 | 0.09 | 0.14 | 0.3 | 0.6 | 1.4 | 2.8 |
| Number of polishing | 1 | 8.0 | 15.8 | 22.1 | 22.8 | 29.5 | 19.2 | 20.2 | 31.6 |
| | 2 | 3.3 | 9.7 | 15.6 | 15.9 | 18.1 | 11.8 | 13.0 | 20.1 |
| | 3 | 1.8 | 6.9 | 12.2 | 12.0 | 16.4 | 10.4 | 10.7 | 16.8 |
| | 4 | - | 5.9 | 11.5 | 10.2 | 12.3 | 8.8 | 11.0 | 16.2 |
| | 5 | - | 4.4 | 7.9 | 9.1 | 9.2 | 7.8 | 8.5 | 13.3 |
| | 6 | - | 3.5 | 8.4 | 8.3 | 8.0 | 6.6 | 7.8 | 11.4 |
| | 7 | - | 2.3 | 7.5 | 8.1 | 9.3 | 6.6 | 7.2 | 9.1 |
| | 8 | - | - | 7.1 | 6.5 | 8.1 | 6.8 | 8.2 | 7.3 |
| | 9 | - | - | 7.6 | 6.6 | 8.6 | 6.3 | 6.7 | 6.4 |
| | 10 | - | - | 7.5 | 6.7 | 6.6 | 5.8 | 6.6 | 6.2 |
| | 11 | - | - | 7.2 | 6.8 | 7.7 | 6.7 | 6.4 | 6.3 |
| | 12 | - | - | 7.2 | 7.3 | 6.2 | 6.4 | 6.0 | 5.0 |
| | 13 | - | - | 6.6 | 6.8 | 6.0 | 5.4 | 5.8 | 4.1 |
| | 14 | - | - | 6.0 | 6.8 | 6.4 | 5.4 | 5.9 | 3.8 |
| | 15 | - | - | 5.8 | 5.7 | 6.5 | 5.4 | 5.6 | 3.9 |
| | 16 | - | - | 6.2 | 5.0 | 6.1 | 5.7 | 5.5 | 4.0 |
| | 17 | - | - | 6.6 | 5.0 | 7.4 | 5.0 | 5.4 | 3.5 |
| | 18 | - | - | 6.4 | 4.5 | 7.2 | 4.7 | 5.1 | 3.6 |
| | 19 | - | - | 5.5 | 4.3 | 6.6 | 4.9 | 5.3 | 3.1 |
| | 20 | - | - | 3.9 | 5.6 | 7.1 | 4.5 | 5.3 | 2.9 |

**Table 2**

| | | X-1 | X-2 | A-1 | A-2 | A-3 | A-4 | A-5 | X-3 |
|---|---|---|---|---|---|---|---|---|---|
| C₂/C₁ | | 0.014 | 0.028 | 0.09 | 0.14 | 0.3 | 0.6 | 1.4 | 2.8 |
| Number of polishing | 1 | 0.014 | 0.028 | 0.09 | 0.14 | 0.3 | 0.6 | 1.4 | 2.8 |
| | 2 | 0.0729 | 0.0459 | 0.0373 | 0.0404 | 0.0544 | 0.0324 | 0.0273 | 0.0387 |
| | 3 | 0.1188 | 0.054 | 0.0341 | 0.0345 | 0.0381 | 0.0286 | 0.024 | 0.0293 |
| | 4 | - | 0.0544 | 0.0324 | 0.0356 | 0.0413 | 0.0263 | 0.0224 | 0.0268 |
| | 5 | - | 0.1425 | 0.0269 | 0.032 | 0.0392 | 0.027 | 0.0221 | 0.0257 |
| | 6 | - | 0.1613 | 0.0368 | 0.032 | 0.0396 | 0.0282 | 0.0242 | 0.0312 |
| | 7 | - | 0.1585 | 0.0331 | 0.0369 | 0.0408 | 0.0315 | 0.0218 | 0.0315 |
| | 8 | - | - | 0.0300 | 0.0448 | 0.0394 | 0.0267 | 0.0255 | 0.0303 |
| | 9 | - | - | 0.03552 | 0.0317 | 0.0477 | 0.0323 | 0.0241 | 0.0345 |
| | 10 | - | - | 0.0327 | 0.0428 | 0.0431 | 0.0439 | 0.0327 | 0.0487 |
| | 11 | - | - | 0.0338 | 0.0352 | 0.0566 | 0.0283 | 0.0303 | 0.067 |
| | 12 | - | - | 0.0426 | 0.0344 | 0.047 | 0.0317 | 0.0283 | 0.0726 |
| | 13 | - | - | 0.0294 | 0.0335 | 0.047 | 0.0346 | 0.0327 | 0.0789 |
| | 14 | - | - | 0.0388 | 0.0393 | 0.0504 | 0.0384 | 0.0265 | 0.0934 |
| | 15 | - | - | 0.044 | 0.0371 | 0.06383 | 0.0354 | 0.0366 | 0.0865 |
| | 16 | - | - | 0.0393 | 0.0348 | 0.0551 | 0.0354 | 0.0268 | 0.0724 |
| | 17 | - | - | 0.0558 | 0.0423 | 0.0495 | 0.0344 | 0.0291 | 0.0961 |
| | 18 | - | - | 0.0594 | 0.0451 | 0.0595 | 0.0442 | 0.0299 | 0.0943 |
| | 19 | - | - | 0.0566 | 0.0476 | 0.0497 | 0.0333 | 0.0364 | 0.0743 |
| | 20 | - | - | 0.0579 | 0.0342 | 0.0526 | 0.0336 | 0.0377 | 0.0963 |

As shown in Tables 1 and 2, in Comparative Examples X-1 and X-2 in which a ratio C₂/C₁ is less than 0.05, the grinding amount is remarkably reduced after polishing less than 10 times, which makes polishing difficult. Furthermore, in Comparative Example X-3, in which the ratio C₂/C₁ is greater than 1.5, the surface roughness Ra gradually increases after the number of polishing greater than 10 times, making it difficult to form a uniform smooth surface. On the other hand, in Examples A-1 to A-5, even if the number of polishing greater than 20, the grinding amount of greater or equal to 3.5 mg/30 seconds and the surface roughness Ra of less than 0.06 µm are maintained, and it was confirmed that a uniform smooth surface can be formed even if the polishing is repeatedly performed on the same polishing surface.

### Reference Signs List

- 10, 20: Polishing Sheet
- 11, 21: Substrate
- 12, 22: Three-dimensional element
- 13, 23: Intermediate layer
- 121, 122, 123, 123: Three-dimensional portion

## Claims

1. A polishing sheet (10) comprising:
a substrate (11);
a plurality of three-dimensional elements (12) that includes diamond abrasive particles and a bonding material, and forms a polishing surface; and
an intermediate layer (13) between the substrate and the three-dimensional element bonding the substrate and the three-dimensional element together such that one side of each three-dimensional element faces the substrate and one side is opposite to the substrate,
wherein a ratio C₂/C₁ of a content of the diamond abrasive particles C₂ to a content of the bonding material C₁ is 0.05 to 1.5 in terms of mass ratio;
**characterized in that** when each three-dimensional element (12) is bisected into a top portion (12a) on the side opposite to the substrate (11) that occupies 20 vol% of the three-dimensional element (12) and a base portion (12b) on the side of the substrate (11) that occupies 80 vol% of the three-dimensional element (12), greater than or equal to 50 mass% of the diamond abrasive particles in the three-dimensional element (12) is positioned in the top portion (12a).

2. The polishing sheet (10) according to claim 1, wherein the ratio C₂/C₁ is from 0.05 to 0.7 by mass ratio.

3. The polishing sheet (10) according to any one of claims 1 to 2, wherein a total volume of the three-dimensional elements (12) is from 60 to 90 vol% relative to a sum of the three-dimensional element and the intermediate layer.

4. The polishing sheet (10) of any of claims 1 to 3, wherein greater than or equal to 55 mass% of the diamond abrasive particles in the three-dimensional element (12) is positioned in the top portion (12a).

5. The polishing sheet (10) of any of claims 1 to 4, wherein greater than or equal to 60 mass% of the diamond abrasive particles in the three-dimensional element (12) is positioned in the top portion (12a).

6. The polishing sheet (10) according to any of claims 1 to 5, wherein an average particle size of the diamond abrasive particles is greater than or equal to 2 µm.

7. The polishing sheet (10) according to claim 6, wherein an average particle size of the diamond abrasive particles is greater than or equal to 5 µm.

8. A polishing method for polishing a plurality of objects to be polished using the polishing sheet (10) described in any one of claims 1 to **7,** comprising:
a first polishing step of pressing the polishing surface of the polishing sheet against the object to be polished to slide the polishing sheet and the object to be polished; and
a reuse step of polishing another object to be polished using at least a portion of the polishing surface used in the first polishing step.

9. The polishing method according to claim 8, wherein the reuse step is performed a plurality of times, and
a plurality of other objects to be polished are polished at least in portion on the polishing surface used in the first polishing step.

## Patentansprüche

1. Ein Polierblatt (10), aufweisend:
ein Substrat (11);
eine Mehrzahl von dreidimensionalen Elementen (12), die Diamantschleifteilchen und ein Bindematerial aufweisen und eine Polieroberfläche ausbilden; und
eine Zwischenschicht (13) zwischen dem Substrat und dem dreidimensionalen Element, die das Substrat und das dreidimensionale Element derart aneinander bindet, dass eine Seite jedes dreidimensionalen Elements dem Substrat zugewandt ist und eine Seite dem Substrat gegenüberliegt,
wobei ein Verhältnis C₂ / C₁ eines Gehalts der Diamantschleifteilchen C₂ zu einem Gehalt des Bindematerials C₁ 0,05 bis 1,5 beträgt, bezogen auf ein Masseverhältnis;
**dadurch gekennzeichnet, dass**, wenn jedes dreidimensionale Element (12) in einen oberen Abschnitt (12a) auf der dem Substrat (11) gegenüberliegenden Seite, der 20 Vol.-% des dreidimensionalen Elements (12) einnimmt, und einen unteren Abschnitt (12b) auf der Seite des Substrats (11), der 80 Vol.-% des dreidimensionalen Elements (12) einnimmt, unterteilt wird, größer als oder gleich 50 Masse-% der Diamantschleifteilchen in dem dreidimensionalen Element (12) in dem oberen Abschnitt (12a) positioniert sind.

2. Das Polierblatt (10) nach Anspruch 1, wobei das Verhältnis C₂ / C₁ von 0,05 bis 0,7 beträgt, nach Masseverhältnis.

3. Das Polierblatt (10) nach einem der Ansprüche 1 bis 2, wobei ein Gesamtvolumen der dreidimensionalen Elemente (12) von 60 bis 90 Vol.-% relativ zu einer Summe aus dem dreidimensionalen Element und der Zwischenschicht beträgt.

4. Das Polierblatt (10) nach einem der Ansprüche 1 bis 3, wobei größer als oder gleich 55 Masse-% der Diamantschleifteilchen in dem dreidimensionalen Element (12) in dem oberen Abschnitt (12a) positioniert sind.

5. Das Polierblatt (10) nach einem der Ansprüche 1 bis 4, wobei größer als oder gleich 60 Masse-% der Diamantschleifteilchen in dem dreidimensionalen Element (12) in dem oberen Abschnitt (12a) positioniert sind.

6. Das Polierblatt (10) nach einem der Ansprüche 1 bis 5, wobei eine mittlere Teilchengröße der Diamantschleifteilchen größer als oder gleich 2 µm ist.

7. Das Polierblatt (10) nach Anspruch 6, wobei eine mittlere Teilchengröße der Diamantschleifteilchen größer als oder gleich 5 µm ist.

8. Ein Polierverfahren zum Polieren einer Mehrzahl von zu polierenden Objekten unter Verwendung des Polierblatts (10), das in einem der Ansprüche 1 bis 7 beschrieben ist, aufweisend:
einen ersten Polierschritt eines Pressens der Polieroberfläche des Polierblatts gegen das zu polierende Objekt, um das Polierblatt und das zu polierende Objekt zu verschieben; und
einen Wiederverwendungsschritt des Polierens eines weiteren zu polierenden Objekts unter Verwendung mindestens eines Abschnitts der Polieroberfläche, die in dem ersten Polierschritt verwendet wird.

9. Das Polierverfahren nach Anspruch 8, wobei der Wiederverwendungsschritt mehrmals durchgeführt wird, und
eine Mehrzahl von anderen zu polierenden Objekten mindestens teilweise auf der Polieroberfläche poliert wird, die in dem ersten Polierschritt verwendet wird.

## Revendications

1. Feuille de polissage (10) comprenant :
un substrat (11) ;
une pluralité d'éléments tridimensionnels (12) qui comportent des particules abrasives de diamant et un matériau de liaison, et forment une surface de polissage ; et
une couche intermédiaire (13) entre le substrat et l'élément tridimensionnel liant le substrat et l'élément tridimensionnel ensemble de telle sorte qu'un côté de chaque élément tridimensionnel est tourné vers le substrat et un côté est opposé au substrat,
dans laquelle un rapport C₂/C₁ entre une teneur en particules abrasives de diamant C₂ et une teneur en matériau de liaison C₁ est de 0,05 à 1,5 en termes de rapport en masse ;
**caractérisée en ce que**, lorsque chaque élément tridimensionnel (12) est divisé en une partie supérieure (12a) sur le côté opposé au substrat (11) qui occupe 20 % en volume de l'élément tridimensionnel (12) et une partie de base (12b) sur le côté du substrat (11) qui occupe 80 % en volume de l'élément tridimensionnel (12), 50 % en masse ou plus des particules abrasives de diamant dans l'élément tridimensionnel (12) sont positionnés dans la partie supérieure (12a).

2. Feuille de polissage (10) selon la revendication 1, dans laquelle le rapport C₂/C₁ va de 0,05 à 0,7 en rapport en masse.

3. Feuille de polissage (10) selon l'une quelconque des revendications 1 à 2, dans laquelle un volume total des éléments tridimensionnels (12) va de 60 à 90 % en volume par rapport à une somme de l'élément tridimensionnel et de la couche intermédiaire.

4. Feuille de polissage (10) selon l'une quelconque des revendications 1 à 3, dans laquelle 55 % en masse ou plus des particules abrasives de diamant dans l'élément tridimensionnel (12) sont positionnés dans la partie supérieure (12a).

5. Feuille de polissage (10) selon l'une quelconque des revendications 1 à 4, dans laquelle 60 % en masse ou plus des particules abrasives de diamant dans l'élément tridimensionnel (12) sont positionnés dans la partie supérieure (12a).

6. Feuille de polissage (10) selon l'une quelconque des revendications 1 à 5, dans laquelle une taille moyenne de particules des particules abrasives de diamant est supérieure ou égale à 2 µm.

7. Feuille de polissage (10) selon la revendication 6, dans laquelle une taille moyenne de particules des particules abrasives de diamant est supérieure ou égale à 5 µm.

8. Procédé de polissage permettant de polir une pluralité d'objets à polir à l'aide de la feuille de polissage (10) selon l'une quelconque des revendications 1 à 7, comprenant :
une première étape de polissage consistant à presser la surface de polissage de la feuille de polissage contre l'objet à polir pour faire glisser la feuille de polissage et l'objet à polir ; et
une étape de réutilisation consistant à polir un autre objet à polir à l'aide d'au moins une partie de la surface de polissage utilisée lors de la première étape de polissage.

9. Procédé de polissage selon la revendication 8, dans lequel l'étape de réutilisation est effectuée une pluralité de fois, et
une pluralité d'autres objets à polir sont polis au moins en partie sur la surface de polissage utilisée lors de la première étape de polissage.
